# EUROPÄISCHE PATENTANMELDUNG

(11) **EP 1 481 838 A2**
(43) Veröffentlichungstag der Anmeldung: **01.12.2004**
(21) Anmeldenummer: 04012391.1
(22) Anmeldetag: 26.05.2004
(51) Int. Cl.: B60L 11/18

(54) **Elektrofahrzeugsystem**

(30) Priorität: 26.05.2003 DE 10324170
(71) Anmelder: EDAG Engineering + Design Aktiengesellschaft, 36039 Fulda (DE)
(72) Erfinder: Best, Martin, 36103 Flieden (DE)
(74) Vertreter: Hebing, Norbert

(57) **Zusammenfassung**

Die Erfindung beschreibt ein Elektrofahrzeugsystem, bestehend aus einem Elektrofahrzeug (1), das mit einem fest installierten, aufladbaren Batteriesatz ausgestattet ist, welcher bei Bedarf über ein Netzladegerät oder über ein Brennstoffzellen-Cargoboxmodul aufgeladen werden kann. Alternativ kann die Batterie auch über einen Verbrennungsmotor, der sich im vorderen Bereich des Fahrzeuges befindet, mobil aufgeladen werden. Des Weiteren besteht die Möglichkeit, das Fahrzeug mit einem Transport-Cargoboxmodul auszustatten, welches individuell nach Benutzerwünschen ausgeführt sein kann. Dies bewirkt eine flexible Nutzung des Elektrofahrzeuges (1). Die Cargoboxmodule sind gleichartig gestaltet und bilden im eingesetzten Zustand einen integralen Bestandteil des Fahrzeuges.

## Beschreibung

Die Erfindung bezieht sich auf ein Elektrofahrzeugsystem.

Im Stand der Technik sind Elektrofahrzeuge bekannt, die mit einem Batteriemodul versehen sind, das die elektrische Energie für das Fahrzeug zur Verfügung stellt. Die Batterien des Moduls müssen aufgeladen werden.

Damit das Fahrzeug auch während einer Wiederaufladephase zur Verfügung steht, ist schon vorgeschlagen worden, zwei austauschbare Batteriemodule vorzusehen, so dass das Fahrzeug - ausgestattet mit dem aufgeladenen Batteriemodul - gefahren werden kann, während das andere Modul in einer Ladestation aufgeladen wird. Da Batteriemodule mit einer ausreichenden Kapazität sehr teuer sind, wird dieses System allerdings selten angewandt.

Des Weiteren sind Elektrofahrzeuge mit Brennstoffzellen bekannt, bei denen im Fahrzeug eine Brennstoffzelle fest eingebaut ist, die aus einem ebenfalls fest mit dem Fahrzeug verbundenen Tank mit einem geeigneten Brennstoff, z. B. Wasserstoff, versorgt wird. Das Problem dabei ist, dass geeignete Brennstoffe noch nicht überall zur Verfügung stehen, so dass der Bewegungshorizont des Fahrzeuges begrenzt ist.

Des Weiteren besteht bei Elektrofahrzeugen das Problem, dass ihre Ladekapazität stark eingeschränkt ist, da die Batteriemodule bzw. die Brennstoffzelleneinbauten relativ schwer sind und einen großen Platzbedarf haben.

Die Erfindung beruht somit auf dem Problem, ein flexibles System zu schaffen, das vielfältige Einsatzmöglichkeiten erlaubt.

Dazu sieht die Erfindung ein Elektrofahrzeugsystem gemäß dem Hauptanspruch vor.

Demnach werden für ein Elektrofahrzeug mehrere Cargoboxmodule, die u.a. ein Brennstoffzellenmodul umfassen, zur Verfügung gestellt, was vielfältige Einsatzmöglichkeiten erlaubt.

Ein weiteres Cargoboxmodul ist ein Batteriemodul mit wiederaufladbaren Batterien. In diesem Fall wird das Fahrzeug vorzugsweise mit dem Batteriemodul gefahren. In der stationären Aufladephase des Batteriemoduls wird das Brennstoffzellenmodul in das Fahrzeug eingesetzt, das ansonsten z. B. zur Stromversorgung einer feststehenden Anlage Verwendung findet, die an das öffentliche Stromnetz angeschlossen ist, solange das Brennstoffzellenmodul für das Fahrzeug benötigt wird.

Der Fahrer hat somit stets die Wahl zwischen den Cargoboxmodulen: Wenn absehbar ist, dass für eine längere Reise am Zielpunkt oder an einem Etappenpunkt keine Möglichkeit besteht, einen geeigneten Brennstoff für die Brennstoffzelle aufzunehmen, kann er das Batteriemodul nutzen, da davon ausgegangen werden kann, dass ein Stromanschluss stets zur Verfügung steht. Wenn die Reise nicht durch Aufladephasen unterbrochen werden soll, wird er auf das Brennstoffzellenmodul zurückgreifen.

Eine weitere Art von Cargoboxmodulen sind Transport-Cargoboxmodule, die zum Transport von Sachen eingesetzt werden und daher keine Energieversorgung bereithalten. Der Einsatz eines solchen Moduls setzt voraus, dass das Fahrzeug mit einem eigenen Batteriesatz versehen ist, der die nötige Antriebsenergie zur Verfügung stellt. Ein solcher Batteriesatz kann fest im Fahrzeug vorzugsweise zwischen den Fahrzeugachsen eingebaut sein und als Speicherpuffer dienen, wenn das Fahrzeug mit einem Brennstoffzellenmodul bzw. einem Batteriemodul anstelle des Transportcargoboxmoduls versehen wird. Bei einem Betrieb des Fahrzeuges mit einem Brennstoffzellenmodul erfolgt gleichzeitig eine Wiederaufladung des Batteriesatzes.

Prinzipiell kann das Fahrzeug auch noch einen Verbrennungsmotor aufweisen, der zusammen mit dem festen Batteriesatz und ggf. den Modulen zur Energieversorgung einen Hybridantrieb darstellt.

Um die Cargoboxmodule problemlos zusammen mit dem Elektrofahrzeug verwenden zu können, verfügen beide über formgleich ausgeführte elektrische Schnittstellen zum Fahrzeug.

Zum optimalen Betrieb der einzelnen Cargoboxmodule werden unterschiedliche Zustandssignale benötigt, die den Zustand, insbesondere des Antriebssystems des Fahrzeuges, beschreiben. Daher ist vorgesehen, dass einzelne Kanäle der Schnittstelle je nach Art des angeschlossenen Cargoboxmoduls Signale unterschiedlicher Bedeutung transportieren und dass eine im Fahrzeug angeordnete Schnittstellensteuerung entsprechend der Art des im Fahrzeug vorhandenen Cargoboxmoduls einstellbar ist.

Auf diese Weise kann eine Steuerung im Fahrzeug feststellen, welches Cargoboxmodul gerade eingebaut ist und entsprechende Informationen über den Zustand des Fahrzeuges bzw. des Fahrzeugantriebes dem Cargoboxmodul zur Verfügung stellen.

Generell kann praktisch an beliebiger Stelle im Fahrzeug ein Aufnahmefach für die Cargoboxmodule vorgesehen sein. Bei Elektrofahrzeugen ist es unter anderem bekannt, einen Batteriesatz seitlich zwischen den beiden Achsen in das Fahrzeug einzuführen. Diese Lage des Aufnahmefaches ist aber insbesondere für ein Brennstoffzellenmodul möglicherweise.nicht geeignet. Daher schlägt die Erfindung weiterhin vor, dass sich das Aufnahmefach des Fahrzeuges zwischen den Hinterrädern des Fahrzeuges befindet und dass es nach hinten offen ist.

Diese Anordnung hat den Vorteil, dass das Cargoboxmodul relativ problemlos in das Fahrzeug eingesetzt werden kann, wobei Teile des Cargoboxmoduls ggf. gleichzeitig einen Teil der Karosserie bilden. Vor allem kann es sich dabei um die Heckpartie des Fahrzeuges handeln, die z. B. mit Leuchteinheiten, wie Rückfahrscheinwerfer, Bremsleuchten und Rücklichtern versehen ist.

Die Bauweise des Fahrzeuges ist insbesondere dann einfach, wenn das Aufnahmefach des Fahrzeuges nach oben hin offen ist und die Cargoboxmodule jeweils mit einer Ladefläche versehen sind, deren Boden das Aufnahmefach schließt.

Um einen leichten Austausch der Cargoboxmodule zu gewährleisten, ist vorgesehen, dass die Cargoboxmodule mit Laufrollen an klappbaren Beinen versehen sind, die selbsttätig eingeklappt werden, wenn das Cargoboxmodul in das Aufnahmefach eingeschoben wird. Auf den Laufrollen kann somit das Cargoboxmodul außerhalb des Fahrzeuges bewegt werden.

Die Erfindung bezieht sich weiterhin auf ein Elektrofahrzeug, das mit einem entsprechenden Aufnahmefach versehen ist und dessen Heck absenkbar ist, so dass die Module, ohne angehoben werden zu müssen, in das Aufnahmefach eingeschoben werden können.

Das Aufnahmefach verfügt weiterhin über eine Rückklappe, die im zugeklappten Zustand das jeweilige Modul sichert.

Zur Erläuterung des Erfindungsgedankens wird im Folgenden ein Ausführungsbeispiel dargestellt. So zeigen
- Fig. 1: eine perspektivische Darstellung eines Elektrofahrzeuges mit einem Aufnahmefach;
- Fig. 2: ein Cargoboxmodul mit einer Brennstoffzelle bzw. mit einer Batterie zum Einsatz in das Aufnahmefach des Fahrzeuges;
- Fig. 3: ein Cargoboxmodul mit klappbaren und mit Laufrollen versehenen Beinen;
- Fig. 4: eine perspektivische Darstellung eines Elektrofahrzeuges mit einem Cargoboxmodul in dem dafür vorgesehenen Aufnahmefach;
- Fig. 5: eine perspektivische Darstellung eines Elektrofahrzeuges mit einer absenkbaren Hinterachs-Schwingenkonstruktion;
- Fig. 6: eine perspektivische Darstellung eines Elektrofahrzeuges mit einem Aufnahmefach, das als Transportfläche genutzt werden kann;
- Fig. 7: ein Cargoboxmodul mit einer Brennstoffzelle zum Einsatz in das Aufnahmefach des Fahrzeuges und
- Fig. 8: ein Transport-Cargoboxmodul mit Führungsrollen und klappbaren, mit Laufrollen versehenen Beinen.

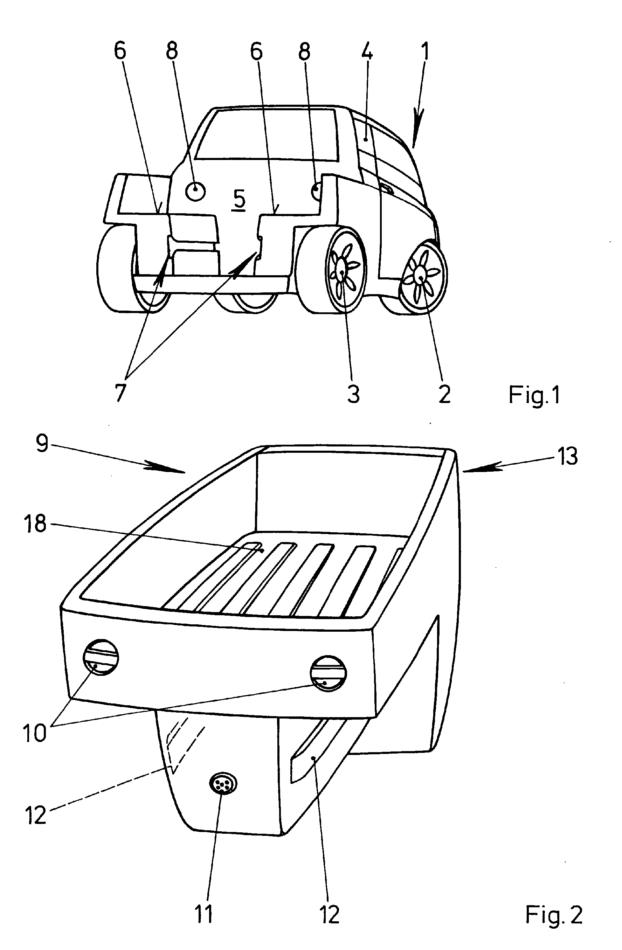

Zunächst wird auf die Figur 1 Bezug genommen. Diese zeigt in perspektivischer Darstellung ein Elektrofahrzeug von hinten.

Das Fahrzeug 1 besteht aus einer Karosserie mit einer Vorderachse 2 und einer Hinterachse 3 sowie einer Fahrgastzelle 4. Des Weiteren ist, was nicht näher dargestellt ist, ein Elektromotor vorgesehen, der die Vorderachse 2 antreibt. Der hintere Teil des Fahrzeuges ist mit einem Aufnahmefach 5 versehen, das nach hinten und oben offen ist und im Querschnitt in etwa T-förmig ist, d. h. dass zu beiden Seiten des Aufnahmefachs 5 zwei Auflageflächen 6 vorhanden sind. Außerdem sind zwei Führungsnuten 7 vorgesehen.

An der Rückseite der Fahrgastzelle 4, die das Aufnahmefach 5 nach vorne begrenzt, befinden sich zwei Verriegelungsaufnahmen 8.

In Figur 2 ist ein typisches Cargoboxmodul 9 dargestellt, das entweder einen Batteriesatz mit wiederaufladbaren Batterien oder eine Brennstoffzelle beinhaltet, oder als Transport-Cargoboxmodul ausgeführt ist, um nicht zum Fahrzeug gehörige oder nicht für den Betrieb des Fahrzeuges notwendige Gegenstände zu transportieren.

In einem Brennstoffzellenmodul ist neben einer Brennstoffzelle auch ein Tank für den Brennstoff sowie alle notwendigen weiteren Baueinheiten zum Betrieb der Brennstoffzelle installiert. Dieses kann unter anderem auch einen Reformer enthalten, der den getankten Brennstoff gegebenenfalls in Wasserstoff für den Betrieb der Brennstoffzelle umwandelt.

Die Kontur des Cargoboxmoduls 9 im Querschnitt ist dem Querschnitt des Aufnahmefachs 5 angepasst, so dass das Cargoboxmodul 9 auf den Auflageflächen 6 zur Auflage gelangt. An der Vorderseite befinden sich zwei Verriegelungsstutzen 10, die mit den Verriegelungsaufnahmen 8 an der Rückseite der Fahrgastzelle 4 zusammenwirken. Außerdem befindet sich dort ein Zentralstecker 11 zur Übertragung der elektrischen Energie sowie zur Übertragung entsprechender Steuersignale. Des Weiteren sind zwei Schienen 12 vorhanden, die mit den Aufnahmenuten 7 im Aufnahmefach 5 des Fahrzeuges zusammenwirken.

Die in der perspektivischen Darstellung dem Betrachter abgewandte Heckseite des Cargoboxmoduls bildet eine Schürze 13, die der äußeren Kontur des Fahrzeuges angepasst ist und die Heckpartie des Fahrzeuges 1 bildet.

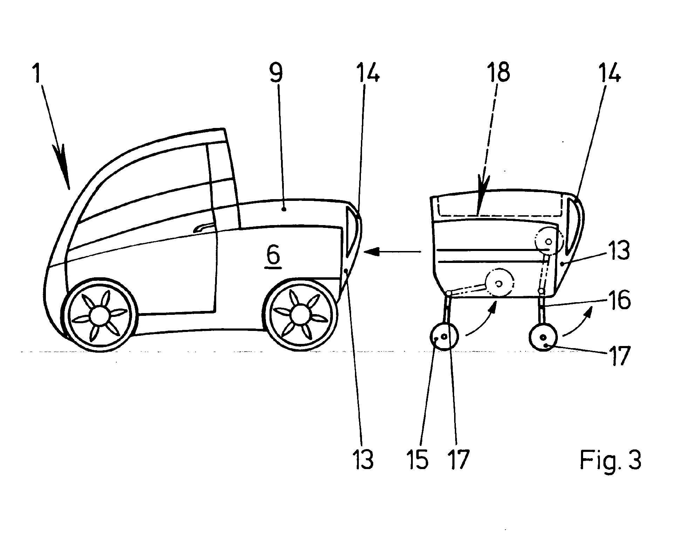

Die Figur 3 zeigt das Fahrzeug mit einem eingesetzten bzw. einem zum Einsatz bereiten Cargoboxmodul 9. Dieses hat zur leichteren Entnahme an der Rückseite zwei Griffe 14. Des Weiteren ist es mit zwei Beinpaaren 15, 16 versehen, die jeweils eine Achse mit Laufrollen 17 besitzen. Die Beinpaare 15, 16 sind klappbar am Cargoboxmodul befestigt. Das vordere Beinpaar 15 wird selbsttätig nach oben geklappt, sobald das Cargoboxmodul 9 in das Aufnahmefach 5 eingeschoben wird. Das rückwärtige Beinpaar 16 wird vom Bediener nach oben geklappt und fixiert, sobald das Cargoboxmodul 9 in das Aufnahmefach 5 eingeschoben worden ist.

Die Oberseite des Cargoboxmoduls wird als Ladefläche 18 genutzt, so dass das Elektrofahrzeug ein sogenanntes Pick-up-Fahrzeug darstellt.

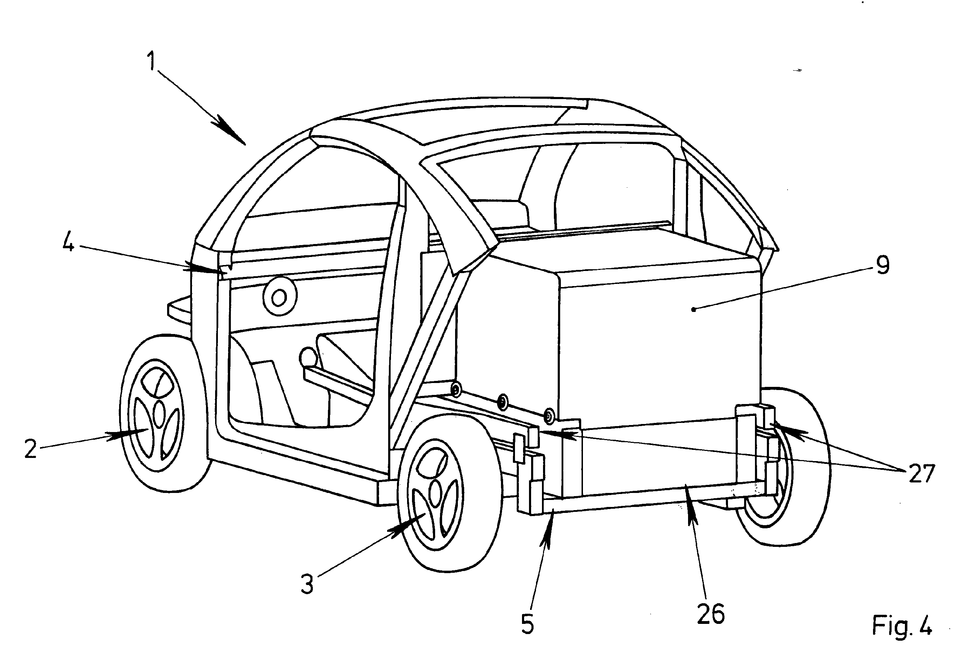

Fig. 4 zeigt ebenfalls in perspektivischer Darstellung ein Elektrofahrzeug von hinten.

Der hintere Teil des Fahrzeuges ist mit einem Aufnahmefach 5 versehen, das nach oben offen ist und nach hinten durch eine Heckklappe 26 abschließt, die gleichzeitig das Cargoboxmodul 9 fixiert. Hierdurch ergibt sich ein etwa T-förmiges Aufnahmefach 5, das zur Beförderung von Gütern, ähnlich wie bei einem Pick-up-Fahrzeug, eingesetzt werden kann, wenn das Fahrzeug ohne Cargoboxmodul 9 verwendet wird. Außerdem sind zwei Führungsschienen 7 vorgesehen, zur Führung des jeweils eingesetzten Cargoboxmoduls 9.

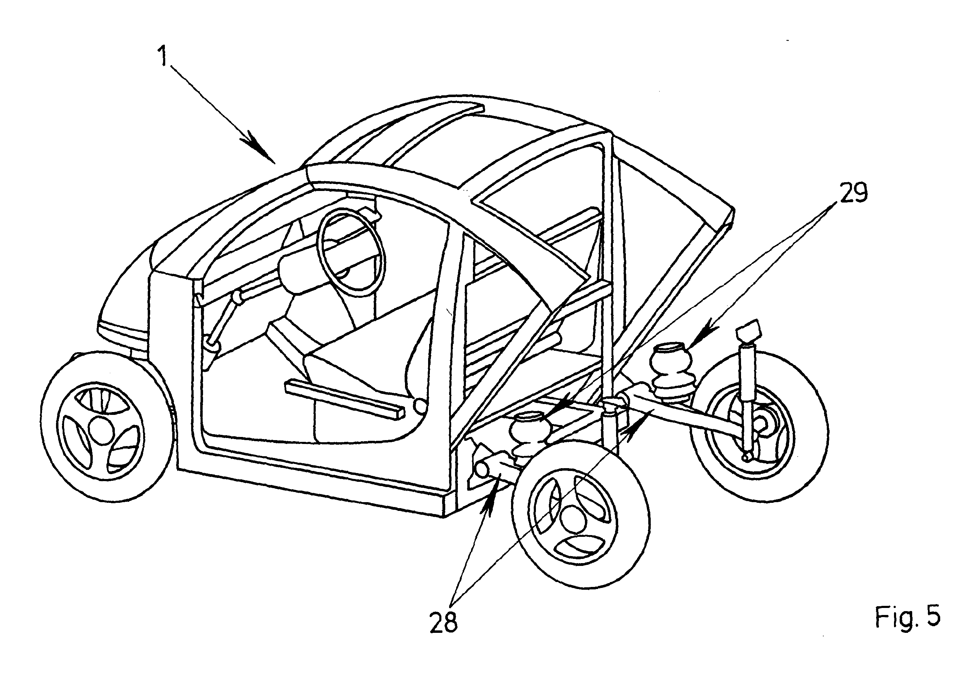

Figur 5 zeigt die Hinterachse 3, die so ausgeführt werden kann, dass sie ähnlich wie bei einem Motorrad als Schwingenkonstruktion mit einer Hinterradschwinge 28 wirkt und den hinteren Teil des Fahrzeuges über entsprechende elektrisch, hydraulisch oder pneumatisch betriebene Verstellelemente 29 absenkt bzw. anhebt.

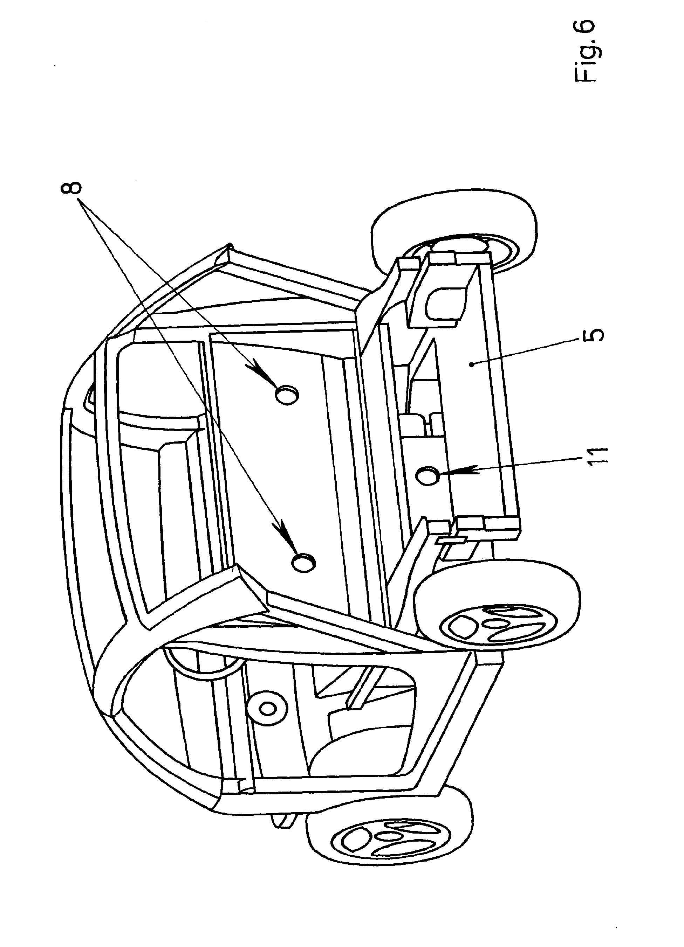

Figur 6 zeigt die Rückseite der Fahrgastzelle 4, die das Aufnahmefach 5, das als Ladefläche genutzt werden kann, nach vorne begrenzt. Dort befinden sich die Cargoboxmodul-Verriegelungsaufnahmen 8 und der Zentralstecker 11 zur Übertragung der elektrischen Energie sowie zur Übertragung entsprechender Steuersignale zwischen Fahrzeug und Cargoboxmodul.

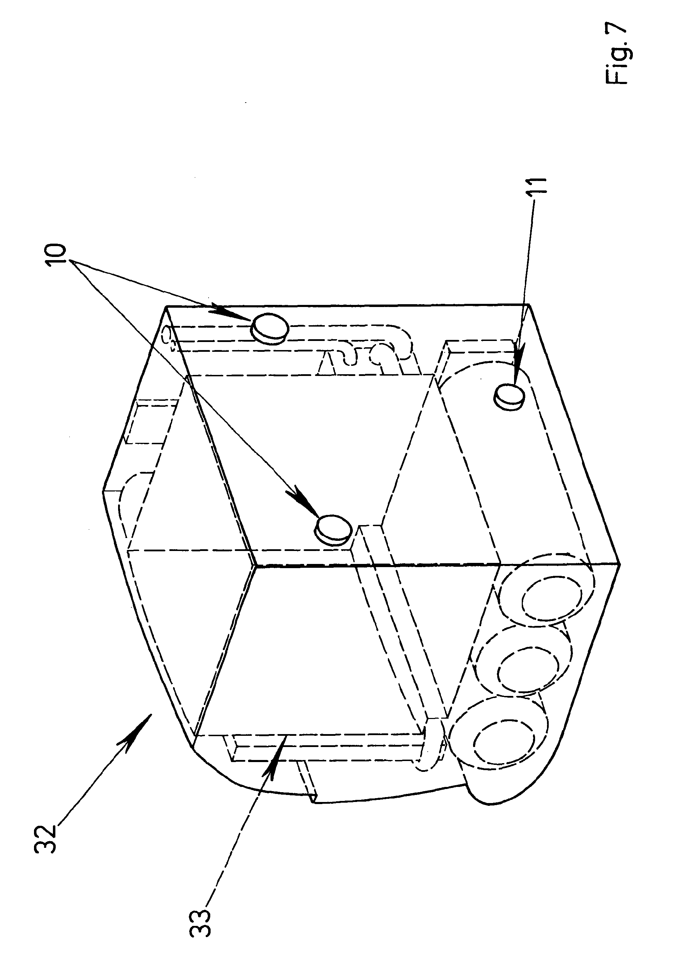

In Figur 7 ist ein typisches Cargoboxmodul 9 dargestellt, das als Brennstoffzellenmodul 32 ausgeführt ist. Es beinhaltet eine Brennstoffzelle mit dazugehörigem Tank und alle weiteren zum Betrieb benötigten Komponenten. Dieses kann unter anderem auch einen Reformer enthalten, der den getankten Brennstoff gegebenenfalls in Wasserstoff für den Betrieb der Brennstoffzelle umwandelt. Außerdem verfügt das Brennstoffzellenmodul 32 noch über einen Stauraum 33.

Auch hier ist die Kontur des Brennstoffzellenmoduls 32 im Querschnitt dem Querschnitt des Aufnahmefachs 5 angepasst, so dass es auf den Führungsschienen 27 zur Auflage gelangt. An der Vorderseite befinden sich zwei Verriegelungsstutzen 10, die mit den Verriegelungsaufnahmen 8 an der Rückseite der Fahrgastzelle 4 zusammenwirken. Außerdem befindet sich dort ein Zentralstecker 11 zur Übertragung der elektrischen Energie sowie zur Übertragung entsprechender Steuersignale.

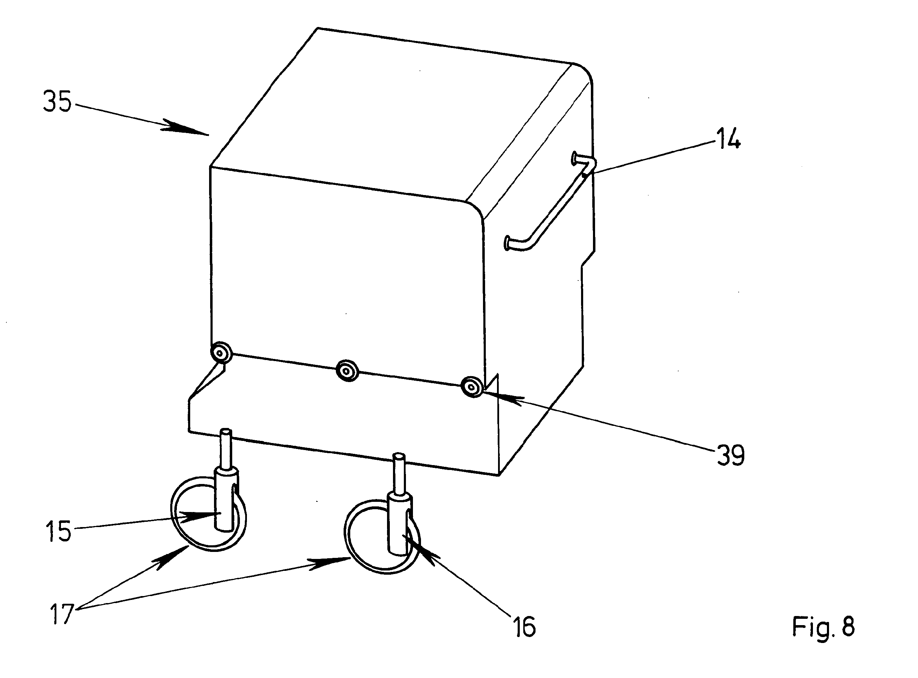

Figur 8 zeigt ein Transport-Cargoboxmodul 35, das im Inneren individuell nach Kundenwünschen mit Ablagefächern ausgestattet sein kann. Dieses verfügt zur leichteren Entnahme über Griffe 14 und des Weiteren über zwei klappbare Beinpaare 15, 16, die jeweils mit Laufrollen 17 ausgestattet sind. Die Beinpaare klappen selbsttätig nach oben, sobald ein Cargoboxmodul 9 in das bei Bedarf durch die Verstellelemente 29 abgesenkte Aufnahmefach 5 eingeschoben wird. Außerdem verfügt das Transport-Cargoboxmodul 35 über Führungsrollen 39, die auf den Führungsschienen 27 abrollen, wenn das Modul in das Aufnahmefach 5 eingeschoben wird.

### Bezugszeichenliste

- 1: Fahrzeug
- 2: Vorderachse
- 3: Hinterachse
- 4: Fahrgastzelle
- 5: Aufnahmefach

- 6: Auflagefläche
- 7: Führungsnuten
- 8: Verriegelungsaufnahme
- 9: Cargoboxmodul
- 10: Verriegelungsstutzen

- 11: Zentralstecker
- 12: Schiene
- 13: Schürze
- 14: Griffe
- 15: Beinpaar ,

- 16: Beinpaar
- 17: Laufrollen
- 18: Ladefläche

- 26: Heckklappe
- 27: Führungsschienen
- 28: Hinterachsschwingen
- 29: Verstellelemente

- 32: Brennstoffzellen-Cargoboxmodul
- 33: Stauraum
- 35: Transport-Cargoboxmodul

- 39: Führungsrollen

## Patentansprüche

1. Elektrofahrzeugsystem bestehend aus einem Elektrofahrzeug (1) mit einem Aufnahmefach (5) für ein einzelnes Cargoboxmodul (9, 32, 35), wobei wenigstens zwei Cargoboxmodule unterschiedlicher Art bereitgehalten sind, die dazu geeignet und bestimmt sind, in das Aufnahmefach (5) des Elektrofahrzeuges (1) aufgenommen zu werden und sich dazu in ihren äußeren Abmessungen insoweit gleichen, und wobei es sich bei dem Cargoboxmodul einer ersten Art um ein Brennstoffzellenmodul (32) mit einer Brennstoffzelle und einem Brennstoffspeicher mit Brennstoff für die Brennstoffzelle handelt.

2. Elektrofahrzeugsystem nach Anspruch 1, **dadurch gekennzeichnet, dass** es sich bei dem Cargoboxmodul (9) einer zweiten Art um ein Batteriemodul handelt, das mit wiederaufladbaren Batterien versehen ist.

3. Elektrofahrzeugsystem nach Anspruch 1 oder 2, **dadurch gekennzeichnet, dass** es sich bei dem Cargoboxmodul einer dritten Art um ein Transport-Cargoboxmodul (35) handelt.

4. Elektrofahrzeugsystem nach einem der vorhergehenden Ansprüche, **dadurch gekennzeichnet, dass** das Elektrofahrzeug (1) einen Satz Pufferbatterien aufweist.

5. Elektrofahrzeugsystem nach einem der vorhergehenden Ansprüche, **dadurch gekennzeichnet, dass** das Elektrofahrzeug (1) einen Verbrennungsmotor aufweist.

6. Elektrofahrzeugsystem nach einem der vorhergehenden Ansprüche, **dadurch gekennzeichnet, dass** die Cargoboxmodule (9)) über formgleich ausgeführte elektrische Schnittstellen zum Fahrzeug (1) verfügen.

7. Elektrofahrzeugsystem nach Anspruch 6, **dadurch gekennzeichnet, dass** einzelne Kanäle der Schnittstelle je nach der Art des angeschlossenen Cargoboxmoduls (9) Signale unterschiedlicher Bedeutung transportieren und dass eine im Fahrzeug angeordnete Schnittstellensteuerung entsprechend der Art des im Fahrzeug (1) vorhandenen Cargoboxmoduls (9) einstellbar ist.

8. Elektrofahrzeugsystem nach einem der vorhergehenden Ansprüche, **dadurch gekennzeichnet, dass** sich das Aufnahmefach (5) des Fahrzeuges zwischen den Hinterrädern des Fahrzeuges (1) befindet, dass es nach hinten offen ist und über zwei Schienen verfügt, und dass die Cargoboxmodule über Gleit- und/oder Rollmittel (39) verfügen.

9. Elektrofahrzeugsystem nach Anspruch 6, **dadurch gekennzeichnet, dass** die Cargoboxmodule (9) mit einer Schürze (13) versehen sind, die die Heckpartie des Fahrzeugs (1) bilden, die mit den für die Rückseite eines Fahrzeuges vorgeschriebenen Leuchten versehen sind.

10. Elektrofahrzeugsystem nach einem der vorhergehenden Ansprüche, **dadurch gekennzeichnet, dass** das Aufnahmefach (5) des Fahrzeuges (1) nach oben offen ist und die Cargoboxmodule (9) jeweils mit einer Ladefläche (18) versehen ist, deren Boden das Aufnahmefach (5) schließt.

11. Elektrofahrzeugsystem nach einem der vorhergehenden Ansprüche, **dadurch gekennzeichnet, dass** die Cargoboxmodule (9) an ihrer Unterseite mit Laufrollen (17) an klappbaren Beinpaaren (15, 16) versehen sind.

12. Elektrofahrzeug mit einem Aufnahmefach für ein Cargoboxmodul (9), **dadurch gekennzeichnet, dass** das Aufnahmefach (5) sich an der Rückseite des Fahrzeuges (1) zwischen dessen Hinterrädern befindet, dass es über einen Boden und eine mit Schienen versehene Seitenwand verfügt und oben offen ist, wobei das Cargoboxmodul (9) rückwärtig in das Aufnahmefach einschiebbar ist.

13. Elektrofahrzeug mit einem Aufnahmefach für ein Cargoboxmodul nach Anspruch 12, **dadurch gekennzeichnet, dass** die Radaufhängung eine schwenkbare Hinterachsschwinge (28) aufweist, die mittels eines Verstellelements höhenverstellbar ist.

14. Elektrofahrzeug nach Anspruch 8, **dadurch gekennzeichnet, dass** das Aufnahmefach über eine Heckklappe (26) verfügt.
